# EUROPÄISCHE PATENTSCHRIFT

(11) **EP 0 731 313 B1**
(45) Veröffentlichungstag und Bekanntmachung des Hinweises auf die Patenterteilung: **25.11.1998**
(21) Anmeldenummer: 96101565.8
(22) Anmeldetag: 03.02.1996
(51) Int. Cl.: F17D 5/02, G01F 15/00, G01M 3/28

(54) **Wasserschadenschutzvorrichtung**
Water damage protection device
Dispositif de protection contre les dégats d'eau

(30) Priorität: 08.03.1995 DE 19508114
(43) Veröffentlichungstag der Anmeldung: 11.09.1996
(73) Patentinhaber: Judo Wasseraufbereitung GmbH, D-71364 Winnenden (DE)
(72) Erfinder: Schuler, Hansjörg, D-71522 Backnang (DE); Schuler, Torsten, D-71573 Allmersbach (DE); Söcknick, Ralf, Dr., D-70806 Kornwestheim (DE); Vogt, Wolfgang, D-71522 Backnang (DE)
(74) Vertreter: KOHLER SCHMID + PARTNER

(56) Entgegenhaltungen:
- EP-A- 0 066 716
- WO-A-93/20425
- DE-C- 3 905 054
- DE-C- 3 907 209
- FR-A- 2 694 087
- US-A- 5 086 806

## Beschreibung

Die Erfindung betrifft ein Verfahren und eine Vorrichtung zum automatischen Verschließen einer Schlauch- oder Rohrleitung für den Transport flüssiger oder gasförmiger Medien, insbesondere Wasser, bei Überschreiten eines vorgebbaren Grenzwertes, beispielsweise eines maximalen Volumenstromes oder einer maximalen zusammenhängenden Entnahmezeit, mit einem in der Schlauch- oder Rohrleitung angeordneten Ventil, das direkt über elektrische Steuersignale oder indirekt über eine elektrisch ansteuerbare Betätigungseinrichtung geschlossen bzw. geöffnet werden kann, wobei vor oder hinter dem Ventil in der Schlauch- oder Rohrleitung ein Volumenstrommeßgerät angeordnet ist, das elektrische Meßsignale in Abhängigkeit vom Volumenstrom durch die Schlauch- oder Rohrleitung sowie von der Durchflußdauer abgibt, und wobei eine elektronische Steuervorrichtung vorgesehen ist, der die Meßsignale zugeführt werden und die aufgrund eines vorgebbaren, gespeicherten Programmes in Abhängigkeit von den empfangenen Meßsignalen Steuersignale entweder direkt an das Ventil oder an die Betätigungseinrichtung abgibt, die ein Schließen bzw. Öffnen des Ventils bewirken.

Eine derartige Vorrichtung ist aus der US-PS 5,086,806 bekannt.

Weitere Vorrichtungen zum Verschließen einer Leitung bei Überschreiten eines Grenzwertes sind beispielsweise in DE 26 00 560 A1 oder der DE 25 22 443 A1 beschrieben.

Diese Vorrichtungen dienen dazu, sowohl bei z.B. einem Rohrbruch das Austreten großer Volumenströme als auch bei einer kleinen Undichtigkeit im nachgeschalteten System das Austreten kleiner Volumenströme über einen größeren Zeitraum hinweg zu verhindern. Den aus DE 26 00 560 Al und DE 25 22 443 Al bekannten Geräten ist jedoch gemein, daß die Funktionen nur mit einer ausgefeilten Hydromechanik realisiert werden können. Hierfür ist eine Vielzahl von Kolben, Rückstellfedern und/oder feinen Kanälen bzw. Bohrungen erforderlich. Dies ist technisch sowohl aufwendig, als auch ausgesprochen verschmutzungsanfällig, so daß eine sichere Funktion im Ernstfall nach längerer Standzeit nicht mehr gewährleistet ist.

Zwar ist der Einsatz eines Volumenzählers, welcher ein Meßsignal an eine elektronische Steuerung abgibt, wenn eine bestimmte Wassermenge durch ihn hindurchgeflossen ist, und ein über einen Elektromotor und eine Nockenwelle betätigtes Hauptstromventil bei der Enthärterregeneration (siehe: Firmenprospekt "Das ist JUDO; maßgebend in der Wasseraufbereitung" 12/1994, S. 22) betätigt, bekannt, ebenso wie die einstellbare differenzdruck- oder zeitgesteuerte Abreinigungsauslösung bei Rauchgasentstaubüngsanlagen, deren Abreinigungsventil in einer Druckluftleitung integriert ist und von einem durch eine elektronische Steuerung betätigten Magnetventil geöffnet bzw. geschlossen wird (siehe Dissertation von Dr. R. Söcknick, Institut für Textil- und Verfahrenstechnik, Denkendorf 1989, S. 48 - 53). Jedoch handelt es sich dabei um einen völlig anderen Anwendungsbereich, außerdem ist die konkrete Ausgestaltung einer Schutzvorrichtung der oben beschriebenen Art hiervon sehr verschieden.

Demgegenüber liegen Vorteile einer Vorrichtung der eingangs beschriebenen Art darin, daß sie sowohl einen einfachen mechanischen Aufbau hat, als auch relativ unempfindlich gegen Verunreinigungen durch das Fluid ist.

Wenn bei der bekannten Vorrichtung nach der US-PS 5,086,806 eine Grenzwertüberschreitung des maximal zulässigen Volumenstromes oder einer maximal zulässigen, zusammenhängenden Entnahmezeit festgestellt wurde, wird das in der Leitung angeordnete Ventil indirekt über eine elektrisch ansteuerbare Betätigungseinrichtung geschlossen. Nachdem das Ventil geschlossen wurde, kann es durch manuelle Betätigung eines Schalters wiederum geöffnet werden. Das Ventil bleibt daraufhin dann solange in dieser Offenstellung, bis es Signale aus der Vorrichtung erhält, die wiederum eine Schließung des Ventiles hervorrufen.

Nachteilig bei dieser Betriebsweise ist die Notwendigkeit der Betätigung eines eigens dafür vorgesehenen Schalters, um manuell ein Öffnen des Ventiles zu bewirken und damit den Fluidstrom wieder in Gang zu bringen. Für den Fall, daß gar kein echter Schadensfall, also ein Leck in einer der Leitungen vorliegt, sondern daß lediglich an einer Zapfstelle zu lange oder zuviel Fluid entnommen wurde, muß nach dem Schließen des Ventils die Vorrichtung von Hand mittels des oben erwähnten Schalters wieder zurückgesetzt und in eine Stellung für normale Fluidentnahme gebracht werden. Dies ist in der Regel umständlich, da die Zapfstellen, insbesondere bei Trink- oder Brauchwasserinstallationen, meist räumlich weit entfernt von der Schutzvorrichtung angebracht sind. Zwar könnte an jeder Zapfstelle eine elektrische Leitung vorgesehen werden, die eine Kommunikation mit der Schutzvorrichtung erlaubt, jedoch wäre dafür ein unverhältnismäßig hoher technischer Aufwand zur Verlegung der Leitungen und Signalgeber erforderlich, und es müßte darüberhinaus eine Einrichtung zur Weiterverarbeitung der abgegebenen elektrischen Signale vorgesehen werden, die bei Empfang eines derartigen Signals den Rücksetzschalter entsprechend betätigt.

Aufgabe der vorliegenden Erfindung ist es demgegenüber, ein Verfahren zum Betrieb der eingangs beschriebenen Vorrichtung vorzustellen, das eine Betätigung eines Rücksetzschalters nach Reparatur eines Leitungsschadens oder nach Beendigung einer außerhalb der zulässigen Grenzwerte liegenden Fluidentnahme überflüssig macht, wobei eine Kommunikation mit der Schutzvorrichtung ohne zusätzliche elektrische Signalleitungen von jeder Zapfstelle aus ermöglicht wird und auf diese Weise bewirkt werden kann, daß das mit Hilfe der Vorrichtung geschlossene Ventil ferngesteuert dauerhaft wieder in eine Stellung für normale Fluidentnahme gebracht werden kann, wenn die Leitungsreparatur beendet ist oder gar kein echter Schadensfall vorliegt.

Diese Aufgabe wird erfindungsgemäß dadurch gelöst, daß das durch eine Grenzwertüberschreitung geschlossene Ventil nach einer gewissen Verschlußzeit automatisch wieder geöffnet wird und offengehalten wird, sofern der Volumenstrom nach dem Öffnen kleiner ist als vor dem Verschließen bzw. auf 0 l/h abgesunken ist, jedoch sofort wieder geschlossen wird, wenn dies nicht der Fall ist, wobei dieser Test in zeitlichem Abstand mindestens einmal, vorzugsweise mehrfach wiederholt wird.

Mit dem erfindungsgemäßen Verfahren wird nicht nur eine automatische Überprüfung einer einmal festgestellten Grenzwertüberschreitung vorgenommen. Auch beschränkt sich die erfindungsgemäße Lehre nicht darauf, daß nach einer automatischen Überprüfung der Schließvorgang des Ventils manuell oder automatisch rückgängig gemacht wird. Vielmehr ist aufgrund der Wiederholung des Volumenstromtests nach einem zeitlichen Abstand dem Benutzer beispielsweise eines Wasserleitungssystems die Möglichkeit gegeben, nach einer automatisch von der Vorrichtung festgestellten Grenzwertüberschreitung lediglich durch Betätigung des Wasserhahns und ohne eine zusätzliche elektrische Signalleitung bzw. ohne sich zum Einbauort der Steuervorrichtung begeben zu müssen, der Wasserschadenschutzvorrichtung mitzuteilen, daß die gemessene Grenzwertüberschreitung nicht auf einen tatsächlichen Schaden zurückzuführen ist, und daß demnach das Ventil auch auf Dauer wieder geöffnet werden kann.

Beispielsweise in dem Fall, daß ein Benutzer eines Wasserleitungssystems über einen größeren Zeitraum Wasser über eine Außenzapfstelle zum Gießen des Gartens entnimmt, während gleichzeitig ein anderer Benutzer unter der Dusche steht, kann leicht eine Überschreitung des vorgegebenen Grenzwertes der Entnahmedauer hervorgerufen werden. In diesem Falle würde die Wasserschadenschutzvorrichtung nach dem erfindungsgemäßen Verfahren zunächst automatisch das Hauptventil schließen, woraufhin sowohl der Gärtner als auch der Benutzer der Dusche zunächst kurzzeitig ohne Wasserversorgung bleiben. Der Duschende könnte dann, ohne mit dem Gärtner kommunizieren zu müssen, seine Zapfstelle schließen. Daraufhin würde bei der nächsten Wiederholung des Tests die Vorrichtung feststellen, daß der Volumenstrom nunmehr bedeutend abgesunken ist, woraufhin das Ventil wieder dauerhaft geöffnet wird und die Dusche ausreichend mit Wasser versorgt wird, ohne daß der Duschende naß und voller Schaum durch das ganze Haus in den Keller laufen müßte, wo üblicherweise eine elektronische Steuervorrichtung installiert sein wird, um diese manuell wieder auf Dauerbetrieb umzuschalten.

Bei Anwendung des erfindungsgemäßen Verfahrens genügt also schon das Schließen des Wasserhahns durch einen Benutzer ohne zusätzliche Betätigung eines mit der Schutzvorrichtung verbundenen Rücksetz-Schalters, um mit der Wasserschadenschutzvorrichtung ohne zusätzliche elektrische Signalleitungen zu kommunizieren und ihr klarzumachen, daß entweder die Reparatur eines tatsächlich eingetretenen Schadenfalles beendet ist, oder daß gar kein echter Schadensfall vorliegt, und daß dementsprechend das Hauptventil wieder dauerhaft in eine Stellung für normale Wasserentnahme gebracht werden muß.

Bei einer bevorzugten Verfahrensvariante des erfindungsgemäßen Verfahrens wird die Verschlußzeit des Ventils im Bereich einiger Sekunden gewählt, bevor eine erste automatische Öffnung des verschlossenen Ventils erfolgt. Dadurch ist die Reaktionszeit der Wasserschadenschutzvorrichtung bis zur erneuten Freigabe des Leitungssystems insbesondere im Falle eines nicht echten Schadens, beispielsweise einer kurzzeitigen Entnahme einer zu großen Volumenmenge, erträglich kurz.

Bei einer weiteren vorteilhaften Variante wird der zeitliche Abstand, mit welchem der Test wiederholt wird, im Bereich einiger Minuten gewählt. Dies reicht bei einem echten Schadensfall oft schon für eine provisorische oder sogar endgültige Reparatur des Lecks im Leitungssystem aus.

Besonders bevorzugt ist eine Verfahrensvariante, bei der nach einer bestimmten Anzahl von Versuchen das Ventil nur noch durch einen externen Eingriff geöffnet werden kann. Auf diese Weise wird in einem echten Schadensfall verhindert, daß durch zu häufiges wiederholtes Öffnen des geschlossenen Ventils eine zu große Menge an Fluid aus dem Leck im Leitungssystem entweicht. Die zulässige Anzahl von Testversuchen kann individuell voreingestellt werden.

In einer besonders vorteilhaften Verfahrensvariante ist vorgesehen, daß der Grenzwert, bei dessen Überschreiten das Ventil (7) geschlossen wird, abhängig von dem Produkt aus einer vom Volumenstrom und einer von der zusammenhängenden Entnahmezeit abhängigen Größe definiert wird. Damit wird das Schließverhalten der Vorrichtung auf die individuellen Systemparameter optimal angepaßt. Beispielsweise bei kleinen, länger andauernden Volumenströmen sollte das Ventil möglichst spät geschlossen werden, während es bei großen Volumenströmen zum Zwecke der Schadensbegrenzung schon relativ frühzeitig das Leitungssystem schließen sollte.

In den Rahmen der vorliegenden Erfindung fällt auch eine Vorrichtung, die mit dem oben beschriebenen erfindungsgemäßen Verfahren betrieben wird, und bei der ein Magnetventil vorgesehen ist, an das die Steuervorrichtung Steuersignale abgibt, wobei das Magnetventil seinerseits als Steuerventil ein den Durchfluß durch die Schlauch- oder Rohrleitung unterbindendes oder freigebendes, hydraulisch betätigbares Hauptventil ansteuert. Durch die indirekte Ansteuerung des Hauptventils durch ein Steuerventil können die elektrischen Signale von der Steuervorrichtung auf einem sehr kleinen Niveau gehalten werden, so daß die Steuervorrichtung besonders kompakt gehalten werden kann und eventuell über Batteriebetrieb vom Netz zumindest zeitweise unabhängig funktionieren kann.

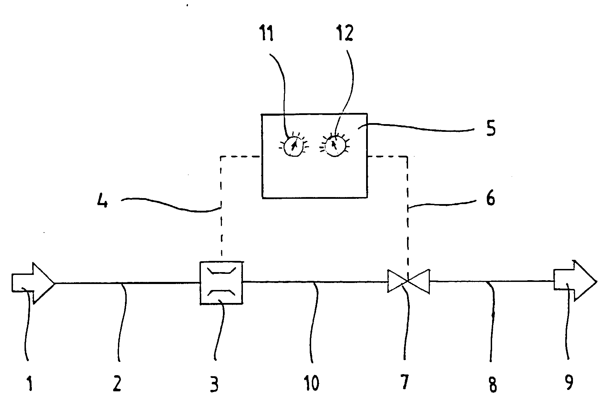

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Figur zeigt ein schematisches Funktionsdiagramm der erfindungsgemäßen Vorrichtung.

Das Grundprinzip der vorliegenden Erfindung ist in der Figur gezeigt. Über einen schematisch als Pfeil dargestellten Zulauf 1 strömt ein Fluid in eine Leitung 2. In einem Volumenstrommeßgerät 3 wird sowohl der Volumenstrom als auch die zusammenhängende Durchflußdauer (Entnahmezeit) des Fluids durch die Leitung 2 registriert. Über eine elektrische Leitung 4 gibt das Volumenstrommeßgerät 3 Meßsignale an eine elektronische Steuervorrichtung 5 ab. Bei Erreichen eines bestimmten Maximaldurchflusses oder nach einer bestimmten zusammenhängenden Maximaldurchflußzeit gibt die elektronische Steuervorrichtung 5 ein Steuersignal über eine weitere elektrische Leitung 6 an ein Ventil 7 bzw. an eine nicht dargestellte Betätigungseinrichtung, wodurch das Ventil 7 geschlossen wird. Eine Leckage in einer nachgeschalteten Leitung 8 bzw. in einer schematisch als Pfeil dargestellten nachgeschalteten Installation 9 wird somit geschlossen, um einen Wasserschaden zu verhindern oder möglichst klein zu halten.

Das Ventil 7 kann dem Volumenstrommeßgerät 3 in Strömungsrichtung sowohl nach- als auch vorgeschaltet sein. Wird das Volumenstrommeßgerät 3 nachgeschaltet, dann fällt es naturgemäß noch unter den Schutz des Ventils 7. Besonders wichtig ist es, daß eine Verbindungsleitung 10 zwischen dem Volumenstrommeßgerät 3 und dem Ventil 7 möglichst kurz gewählt wird, da dieser Leitungsabschnitt platzen kann, ohne daß die Wasserschadenschutzvorrichtung anspricht.

Besonders vorteilhaft ist die Vorrichtung nach der Figur dann, wenn mit Hilfe einer Einstellvorrichtung 11 bzw. 12 (z. B. bestehend aus je einem Potentiometer o. ä.) der Volumenstrom bzw. die zusammenhängende Entnahmedauer, bei denen das Steuersignal für das Schließen des Ventils 7 von der elektrischen Steuervorrichtung 5 an das Ventil 7 abgegeben wird, eingestellt werden kann.

Besonders vorteilhaft wird der Volumenstrom mit zwei verschiebbaren Kolben bestimmt, wobei ein Kolben bereits dann von strömendem Wasser gegen die Kraft einer schwachen Feder in seine Endposition bewegt wird, wenn der Volumenstrom sehr klein (0 - 20 l/h) ist. Erreicht er diese Endposition, wird dies z.B. durch das Signal eines Hallsensors der elektronischen Steuervorrichtung 5 mitgeteilt und hierdurch eine Zeituhr gestartet. Liegt dieses Signal vom Hallsensor länger als die hierfür voreingestellte zulässige Zeitdauer an der Steuerung an, dann gibt die Steuerung ein Schließsignal an das Ventil 7 ab.

Beim Überschreiten eines maximalen zulässigen Volumenstromes wird der zweite Kolben gegen die Kraft einer wesentlich stärkeren Feder ebenfalls in seine Endposition bewegt. Dort angekommen wird ein Meßsignal an die Steuervorrichtung 5 abgegeben, die hierdurch veranlaßt, daß das Ventil 7 sofort geschlossen wird.

Bei einer noch vorteilhafteren Ausführungsform wird sowohl für die Messung des Volumenstromes als auch für Messung der zusammenhängenden Entnahmezeit lediglich ein einziges Funktionselement verwendet. Hierfür eignet sich z. B. ein Wasserzähler, der auf einer Welle einen Magnet trägt, welcher über einen Hallsensor elektrische Impulse proportional zur Umdrehungsgeschwindigkeit des Wasserzählerlaufrades und somit proportional zum Volumenstrom an die Steuervorrichtung 5 abgibt. Die Impulsfolge wird dementsprechend solange an die Steuervorrichtung abgegeben, wie das Fluid ohne Unterbrechung durch den Wasserzähler fließt.

In einer erfindungsgemäßen Ausführungsform wird von der Steuervorrichtung 5 ein in der Zeichnung nicht dargestelltes, kleines elektromagnetisches Ventil angesteuert, welches seinerseits ein den Durchfluß unterbindendes, hydraulisch betriebenes Hauptventil (Ventil 7) betätigt.

Wurde das Ventil 7 durch das Überschreiten eines Grenzwertes geschlossen, wird es bei dem erfindungsgemäßen Verfahren durch die Steuervorrichtung 5 nach einer gewissen Zeit, z.B. einigen Sekunden, wieder geöffnet. Ist der gemessene Volumenstrom nach dem Öffnen kleiner als vor dem Verschließen (alternativ könnte als Kriterium hier auch ein Absinken des Volumenstromes auf 0 l/h gefordert werden), dann bleibt das Ventil 7 geöffnet. Wenn dies nicht der Fall ist, schließt das Ventil 7 sofort wieder.

Dieser Test wird im zeitlichen Abstand von z. B. einigen Minuten mindestens einmal, vorzugsweise mehrfach wiederholt. So hat der Benutzer die Möglichkeit mit seiner Wasserschadenschutzvorrichtung zu kommunizieren. D. h., sollte er versehentlich zu lange Wasser gezapft haben, oder den maximal zulässigen Volumenstrom überschritten haben, so verschließt zwar die erfindungsgemäße Wasserschadenschutzvorrichtung die Leitungen 2, 8. Wenn dann jedoch eine bzw. alle Wasserzapfstellen geschlossen werden, registriert die Vorrichtung dies beim oben beschriebenen, erneuten Öffnen des Ventils 7 und kann so darüber informiert werden, daß kein Schadensfall vorliegt, sondern der Benutzer lediglich eine kontrollierte Grenzwertüberschreitung verursacht hat.

## Patentansprüche

1. Verfahren zum Betrieb einer Vorrichtung zum automatischen Verschließen einer Schlauch- oder Rohrleitung (2, 10, 8) für den Transport flüssiger oder gasförmiger Medien, insbesondere Wasser, bei Überschreiten eines vorgebbaren Grenzwertes, beispielsweise eines maximalen Volumenstromes oder einer maximalen zusammenhängenden Entnahmezeit, mit einem in der Schlauch- oder Rohrleitung (2, 10, 8) angeordneten Ventil (7), das über eine elektrisch ansteuerbare Betätigungseinrichtung geschlossen bzw. geöffnet werden kann, wobei vor oder hinter dem Ventil (7) in der Schlauch- oder Rohrleitung (2, 10, 8) ein Volumenstrommeßgerät (3) angeordnet ist, das elektrische Meßsignale in Abhängigkeit vom Volumenstrom durch die Schlauch- oder Rohrleitung (2, 10, 8) sowie von der Durchflußdauer abgibt, und wobei eine elektronische Steuervorrichtung (5) vorgesehen ist, der die Meßsignale zugeführt werden und die aufgrund eines vorgebbaren, gespeicherten Programmes in Abhängigkeit von den empfangenen Meßsignalen Steuersignale an die Betätigungsvorrichtung abgibt, die ein Schließen bzw. Öffnen des Ventils (7) bewirken,
dadurch gekennzeichnet,
daß das durch eine Grenzwertüberschreitung geschlossene Ventil (7) nach einer gewissen Verschlußzeit automatisch wieder geöffnet wird und offengehalten wird, sofern der Volumenstrom nach dem Öffnen kleiner ist als vor dem Verschließen bzw. auf 0 l/h abgesunken ist, jedoch sofort wieder geschlossen wird, wenn dies nicht der Fall ist, wobei dieser Test in zeitlichem Abstand mindestens einmal, vorzugsweise mehrfach wiederholt wird.

2. Verfahren nach Anspruch 1, dadurch gekennzeichnet, daß die Verschlußzeit im Bereich einiger Sekunden gewählt wird.

3. Verfahren nach Anspruch 1 oder 2, dadurch gekennzeichnet, daß der zeitliche Abstand, mit welchem der Test wiederholt wird, im Bereich einiger Minuten gewählt wird.

4. Verfahren nach einem der vorhergehenden Ansprüche, dadurch gekennzeichnet, daß nach einer bestimmten Anzahl von Versuchen das Ventil (7) nur noch durch einen externen Eingriff geöffnet werden kann.

5. Verfahren nach einem der vorhergehenden Ansprüche, dadurch gekennzeichnet, daß der Grenzwert, bei dessen Überschreiten das Ventil (7) geschlossen wird, abhängig von dem Produkt aus einer vom Volumenstrom und einer von der zusammenhängenden Entnahmezeit abhängigen Größe definiert wird.

6. Vorrichtung zum automatischen Verschließen einer Schlauch- oder Rohrleitung (2, 10, 8) für den Transport flüssiger oder gasförmiger Medien, insbesondere Wasser, bei Überschreiten eines vorgebbaren Grenzwertes, beispielsweise eines maximalen Volumenstromes oder einer maximalen zusammenhängenden Entnahmezeit, mit einem in der Schlauch- oder Rohrleitung (2, 10, 8) angeordneten Ventil (7), das über eine elektrisch ansteuerbare Betätigungseinrichtung geschlossen bzw. geöffnet werden kann, wobei vor oder hinter dem Ventil (7) in der Schlauch- oder Rohrleitung (2, 10, 8) ein Volumenstrommeßgerät (3) angeordnet ist, das elektrische Meßsignale in Abhängigkeit vom Volumenstrom durch die Schlauch- oder Rohrleitung (2, 10, 8) sowie von der Durchflußdauer abgibt, und wobei eine elektronische Steuervorrichtung (5) vorgesehen ist, der die Meßsignale zugeführt werden und die aufgrund eines vorgebbaren, gespeicherten Programmes in Abhängigkeit von den empfangenen Meßsignalen Steuersignale an die Betätigungsvorrichtung abgibt, die ein Schließen bzw. Öffnen des Ventils (7) bewirken,
dadurch gekennzeichnet,
daß die Steuervorrichtung (5) so ausgebildet ist, daß das durch eine Grenzwertüberschreitung geschlossene Ventil (7) nach einer gewissen Verschlußzeit automatisch wieder geöffnet und offengehalten werden kann, sofern der Volumenstrom nach dem Öffnen kleiner ist als vor dem Verschließen bzw. auf 0 l/h abgesunken ist, jedoch sofort wieder geschlossen werden kann, wenn dies nicht der Fall ist, wobei dieser Test in zeitlichem Abstand mindestens einmal, vorzugsweise mehrfach wiederholt werden kann.

7. Vorrichtung nach Anspruch 6, dadurch gekennzeichnet, daß ein Magnetventil vorgesehen ist, an das die Steuervorrichtung (5) Steuersignale abgibt, wobei das Magnetventil seinerseits als Steuerventil ein den Durchfluß durch die Schlauch- oder Rohrleitung (2, 10, 8) unterbindendes oder freigebendes, hydraulisch betätigbares Hauptventil (7) ansteuert.

## Claims

1. Method for the operation of a device for the automatic closing of a hose or a pipe (2, 10, 8) for transporting liquid or gaseous media, in particular water, when a predetermined limiting value is exceeded, e.g. a maximum volume flow or a maximum continuous removal time, having a valve (7) disposed in the hose or pipe (2, 10, 8) which can be opened or closed via an electronically controllable actuator, wherein a volume flow measuring means (3) is disposed in the hose or pipe (2, 10, 8) upstream or downstream of the valve (7) which issues electrical measuring signals in dependence on the volume flow through the hose or pipe (2, 10, 8) as well as in dependence on the time duration of flow, and wherein an electronic control device (5) is provided for receiving the measuring signals and which, in dependence on a predetermined stored program and in dependence on the measuring signals received, issues control signals to the actuator to effect a closing or opening of the valve (7),
characterized in that
the valve (7) closed when a limit value has been exceeded is, subsequent to a certain closing time, automatically reopened and held open if the volume flow subsequent to opening has sunk to a value smaller than prior to closing or to 0 l/h, however, is once more immediately closed if this is not the case, wherein this test is carried out in time intervals at least once and preferentially a plurality of times.

2. Method according to claim 1, characterized in that the closing time is chosen in the vicinity of several seconds.

3. Method according to claim 1 or 2, characterized in that the time separation with which the test is repeated is chosen in the region of several minutes.

4. Method according to any one of the preceding claims, characterized in that, after a certain number of attempts, the valve (7) can only be reopened through external intervention.

5. Method according to any one of the preceding claims, characterized in that the valve (7) is closed when a limit value is exceeded which is dependent upon the product between the volume flow and a quantity dependent on the continuous removal time.

6. Device for automatic closing of a hose or pipe (2, 10, 8) for the transport of liquid or gaseous media, in particular water, when a predetermined limit value is exceeded, e.g. a maximum volume flow or a maximum continuous removal time, having a valve (7) disposed in the hose or pipe (2, 10, 8) which can be closed or opened via an electrically controllable actuator, wherein a volume flow measuring device (3) is disposed in the hose or pipe (2, 10, 8) upstream or downstream of the valve (7) which issues electrical measuring signals in dependence on the volume flow through the hose or pipe (2, 10, 8) as well as in dependence on the time duration of the flow, and wherein an electronic control device (5) is provided for receiving the measurement signals and for issuing control signals to the actuator in dependence on a predetermined stored program and on the received measurement signals to close or open the valve (7),
characterized in that
the control device (5) is configured in such a fashion that the valve closed when a limit value is exceeded can be automatically reopened after a certain closing time and held open if the volume flow subsequent to opening has dropped to a value smaller than that prior to closing or to 0 l/h , however, is once more immediately closed if this is not the case, wherein this test is repeated in time separations at least once and preferentially a plurality of times.

7. Device according to claim 6, characterized in that the control device (5) issues control signals to a magnetic valve, wherein the magnetic valve is a control valve for controlling a hydraulically operated main valve (7) for blocking or opening flow through the hose or pipe (2, 10, 8).

## Revendications

1. Procédé de mise en oeuvre d'un dispositif destiné à la fermeture automatique d'un tuyau souple ou d'une conduite (2, 10, 8) pour le transport de fluides liquides ou gazeux, en particulier de l'eau, lors du dépassement d'une valeur limite pouvant être préréglée, par exemple d'un débit volumique maximal ou d'une durée continue maximale de prélèvement, comportant une vanne (7) montée dans le tuyau souple ou la conduite(2, 10, 8), laquelle peut être ouverte ou fermée via un dispositif d'actionnement à commande électrique, un appareil de mesure de débit volumique (3) étant monté avant ou après la vanne (7) dans le tuyau souple ou la conduite (2, 10, 8), et produisant des signaux de mesure électriques en fonction du débit volumique dans le tuyau souple ou la conduite (2, 10, 8) ainsi que de la durée d'écoulement et un dispositif électronique de commande (5) étant prévu, auquel les signaux de mesure sont transmis et qui, sur la base d'un programme mémorisé pouvant être préétabli, envoie, en fonction des signaux de mesure reçus, des signaux de commande au dispositif d'actionnement, qui provoquent une fermeture ou une ouverture de la vanne (7), caractérisé en ce que la vanne (7) fermée par un dépassement de valeur limite est automatiquement rouverte après un certain temps de fermeture et est maintenue ouverte, pour autant que le débit volumique après l'ouverture soit plus petit qu'avant la fermeture ou soit retombé à 0,1 l/h, mais est immédiatement refermée si ceci n'est pas le cas, ce test étant répété au moins une fois, de préférence plusieurs fois, après un certain intervalle de temps.

2. Procédé suivant la revendication 1, caractérisé en ce que le temps de fermeture est choisi de l'ordre de quelques secondes.

3. Procédé suivant la revendication 1 ou 2, caractérisé en ce que l'intervalle de temps après lequel le test est répété est choisi de l'ordre de quelques minutes.

4. Procédé suivant l'une quelconque des revendications précédentes, caractérisé en ce que, après un certain nombre d'essais, la vanne (7) ne peut plus être ouverte que par une intervention extérieure.

5. Procédé suivant l'une quelconque des revendications précédentes, caractérisé en ce que la valeur limite dont le dépassement provoque la fermeture de la vanne (7), est définie en fonction d'une grandeur dépendant du produit du débit volumique et d'une grandeur dépendant du temps de prélèvement continu.

6. Dispositif de fermeture automatique d'un tuyau souple ou d'une conduite (2, 10, 8) pour le transport de fluides liquides ou gazeux, en particulier de l'eau, lors du dépassement d'une valeur limite pouvant être préréglée, par exemple d'un débit volumique maximal ou d'une durée continue maximale de prélèvement, comportant une vanne (7) montée dans le tuyau souple ou la conduite (2, 10, 8), laquelle peut être ouverte ou fermée via un dispositif d'actionnement à commande électrique, un appareil de mesure de débit volumique (3) étant monté avant ou après la vanne (7) dans le tuyau souple ou la conduite (2, 10, 8), et produisant des signaux de mesure électriques en fonction du débit volumique dans le tuyau souple ou la conduite (2, 10, 8) ainsi que de la durée d'écoulement et un dispositif électronique de commande (5) étant prévu, auquel les signaux de mesure sont transmis et qui, sur la base d'un programme mémorisé pouvant être préétabli, envoie, en fonction des signaux de mesure reçus, des signaux de commande au dispositif d'actionnement, qui provoquent une fermeture ou une ouverture de la vanne (7), caractérisé en ce que le dispositif de commande (5) est construit de telle façon que la vanne (7) fermée par un dépassement de valeur limite puisse être automatiquement rouverte après un certain temps de fermeture et être maintenue ouverte, pour autant que le débit volumique après l'ouverture soit plus petit qu'avant la fermeture ou soit retombé à 0,1 l/h, mais puisse cependant être immédiatement refermée si ceci n'est pas le cas, ce test pouvant être répété au moins une fois, de préférence plusieurs fois, après un certain intervalle de temps.

7. Dispositif suivant la revendication 6, caractérisé en ce qu'une électrovalve est prévue, à laquelle le dispositif de commande (5) envoie des signaux de commande, l'électrovalve commandant de son côté en tant que valve de commande une vanne principale (7) pouvant être actionnée par voie hydraulique, interrompant ou libérant le débit le tuyau souple ou la conduite (2, 10, 8).
